# EUROPÄISCHE PATENTANMELDUNG

(11) **EP 1 014 641 A1**
(43) Veröffentlichungstag der Anmeldung: **28.06.2000**
(21) Anmeldenummer: 98124010.4
(22) Anmeldetag: 22.12.1998
(51) Int. Cl.: H04L 29/06, H04L 12/28

(54) **Verfahren und Vorrichtung zur Reduzierung der Aufarbeitungszeit von Daten in Kommunikationsnetzen**

(71) Anmelder: TELEFONAKTIEBOLAGET LM ERICSSON, 126 25 Stockholm (SE)
(72) Erfinder: Reiner, Ludwig, 52355 Düren (DE); Bela, Rathonyi, 214 40 Malmo (SE)
(74) Vertreter: Mohsler, Gabriele

(57) **Zusammenfassung**

Die Erfindung betrifft ein Verfahren und eine Vorrichtung zur Verbesserung der Aufarbeitungszeit von empfangenen Daten in paketorientierten Anwendungen bei einer Übertragung über Kommunikationsnetze, insbesondere über ein IP-Netzwerk und ein Mobilkommunikationsnetzwerk wie Global System for Mobile Communication (GSM), Universal Mobile Telecommunication System (UMTS) or General Packet Radio Service (GPRS). Die empfangenen Datenpakete der zweiten Protokollschicht, beispielsweise die RLP-Rahmen werden beim Empfänger direkt in der zweiten Protokollschicht zu Datenpakete der ersten Protokollschicht, beispielsweise zu PPP-Rahmen zusammengesetzt. Die vollständig und korrekt zusammengesetzten Datenpakete werden dann an die erste Protokollschicht freigegeben. Bei der Freigabe der Datenpakete an die erste Protokollschicht wird zwischen zwei Modi unterschieden. Bei dem Intra-Datentransfer-Modus handelt es sich um einen Modus, bei dem alle vollständig erstellte Datenpakete freigeben werden, das heißt unabhängig davon ob die Datenpakete zu dem gleichen oder zu zwei verschiedenen Datentransfers gehören. Im Gegensatz dazu wird noch der Inter-Datentransfer-Modus unterschieden. In diesem Modus werden an die erste Protokollschicht ausschließlich die vollständig erstellte Datenpakete, die zu verschiedenen Datentransfer gehören, freigegeben.

## Beschreibung

Die Erfindung betrifft ein Verfahren und eine Vorrichtung zur Verbesserung der Aufarbeitungszeit von empfangenen Daten in paketorientierten Anwendungen bei einer Übertragung über Kommunikationsnetze, insbesondere über ein IP-Netzwerk und ein Mobilkommunikationsnetzwerk wie Global System for Mobile Communication (GSM), universal Mobile Telecommunication System (UMTS) or General Packet Radio Service (GPRS).

Ein Protokoll ist definiert als eine Gesamtheit aller Vereinbarungen zwischen Partnerinstanzen zum Zweck einer gemeinsamen Kommunikation. Somit ist, ein gemeinsames verbindliches Protokoll eine Voraussetzung für einen Datenaustausch zwischen zwei kommunizierenden Netzknoten. Erforderlich dabei ist, daß die Protokolle universal und untereinander kompatibel definiert werden. Denn nur mit einer einheitlichen Grundlage ist es möglich unterschiedliche Netzwerke miteinander zu verbinden, um ebenfalls über die Grenze eines Systems hinweg Kommunikation zu betreiben.

Das Gesamtprotokoll einer Kommunikation wird, im Sinne eines modularen Aufbaus in Schichten, genannt auch Ebene oder Layers, eingeteilt. Jede Schicht löst die ihr zugeteilten Aufgaben mit einem eigenen Protokoll. Über die eindeutig definierten Schnittstellen wird eine Kommunikation zwischen den Nachbarschichten gewährleistet. Hierbei steht eine Schicht n in Verbindung mit der direkt darüber liegenden Schicht n+1, in dem sie Dienste für diese erbringt und mit der direkt darunter liegenden Schicht n-1, in dem sie deren Dienste nutzt. Zusätzlich erfolgt eine Kommunikation mit der Schicht n des Kommunikationspartners unter der Ausnutzung der Dienste aller niedrigeren Schichten. Dadurch wird der logische Datenfluss von Protokolldateneinheiten, sogenannten PDUs (Protocol Data Units), auf jeweils einer Protokollschicht realisiert. Auf der Empfängerseite werden die Daten in umgekehrte Reihenfolge behandelt, das heißt von den unteren Schichten werden die Daten an die direkt darüberliegenden Protokollschichten freigegeben.

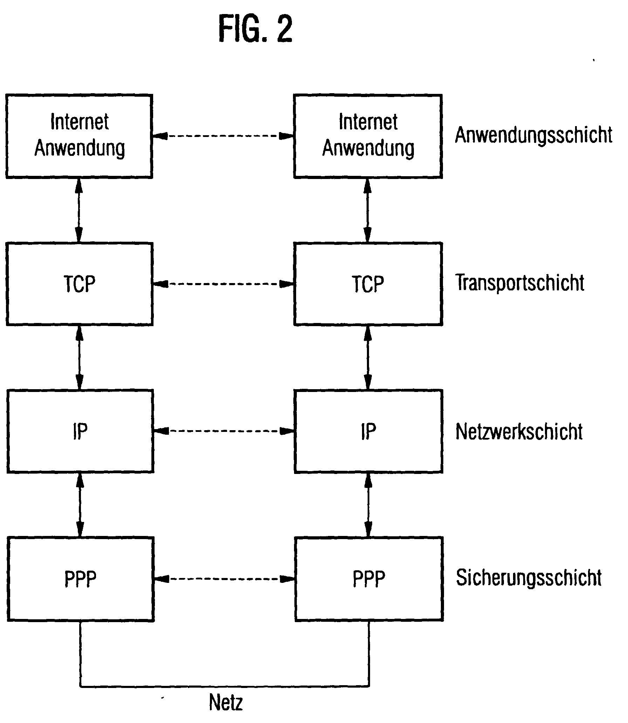

Der Aufbau des Protokollstapels kann in Abhängigkeit von dem physikalischen Netz und von der Anwendung variieren. Die Variation muss jedoch in den Kompatibilitätsgrenzen liegen, so daß die Kommunikation zwischen verschiedenen Netzen gewährleistet wird. Der standardisierte Protokollstapel für Internet Anwendungen ist der TCP/IP (Transmission Control Protokoll/Internet Protokoll) Protokollstapel. Es besteht aus vier Schichten. Die oberste Schicht, die Anwendungsschicht beinhaltet Anwendungsprotokolle. Direkt darunter ist ein Transportprotokoll, zum Beispiel das sogenannte TCP (Transmission Control Protocol) angeordnet. Das Internet Protokoll das sogenannte IP, bildet die Netzwerkschicht. Die zwei untersten Schichten, die Sicherungsschicht und die Bitübertragungsschicht können unter dem Begriff netzwerkorientierte Schichten zusammengefasst werden, denn sie sind in Abhängigkeit von dem darunterliegenden Netz spezifisch definiert. Dieser modulare Aufbau des TCP-Protokollstapels und die Kommunikationsverbindungen zwischen den jeweiligen Schichten sind in Figur 2 dargestellt.

Das Transportprotokoll TCP leistet einen zuverlässigen Transportdienst für einen Bytestrom. Zuverlässigkeit ist hier im Sinne von Fehlerfreiheit, Reihenfolgetreue und Schutz vor Datenverlusten und Duplikaten zu verstehen. Die Fehlerkorrektur erfolgt mit dem Einsatz des sogenannten ARQ (Automatic Repeat reQuest) Verfahrens. Auf der Senderseite wird eine Kopie der zu übertragenden Pakete erstellt und so lange aufbewahrt bis das gesendete Datenpaket von der Gegenseite positiv quittiert wird. Der Empfänger überprüft das empfangene Paket und bestätigt den korrekten Empfang mittels positiver Quittung und verwirft den Empfang eines fehlerhaft empfangenen Pakets. Hierbei ist anzumerken, daß TCP keine Versendung von negativen Quittungen zuläßt. Die Wiederholung der fehlerhaft übertragenen Pakete erfolgt mittels eines Mechanismus, welches auf den positiven Quittungen basiert, d.h. bei Nichtvorliegen einer positiven Quittung wird beim Sender unter bestimmten Umständen darauf geschlossen, daß ein Paket nicht empfangen wurde.

Der zu übertragende Bytestrom, der von der Anwendungsschicht an die TCP-Schicht übergeben wird, wird von dem TCP in Segmente unterteilt, welche dann als IP-Datagramme übertragen werden. Ein IP-Datagramm bezeichnet ein Datenpaket, das nach den Regeln des IP-Protokolls formatiert wird. Die Eigenschaft der Datagramme ist, daß der Datenaustausch, der durch den Einsatz der Datagramme realisiert wird, nicht zuverlässig ist. Somit wird vom IP keine Garantie gegeben, daß ein Paket in der Tat zu einem Empfänger geliefert wird. Ebenfalls können IP-Datagramme in der Reihenfolge vertauscht oder Dupliziert beim Empfänger ankommen. In diesem Konzept ist es aber die Aufgabe von TCP, die fehlerhafte Übertragung zu erkennen und die aufgetretenen Fehler zu beheben.

Die IP-Datagramme, werden weiterhin aufgrund des Hierarchieprinzips der direkt darunterliegenden Sicherungsschicht übermittelt. Diese Schicht empfängt die IP-Datagramme und organisiert diese in sogenannte Rahmen. Dies erfolgt in einem Verfahren, das unter dem Namen Rahmung oder "Framing" bekannt ist. Das heißt die Sicherungsschicht verpackt ein IP-Datagram in ein oder mehrere Rahmen, wobei die Abgrenzung der Rahmen durch die Verwendung spezieller Bitkombination erfolgt. Hierbei ist es festgelegt, welche Bitkombination den Anfang, das sogenannte Anfangskennzeichen und welche das Ende, das sogenannte Endekennzeichen eines Rahmens bedeutet.

Die Sicherungsschicht erfüllt außer der Rahmung weitere zwei Aufgaben. Die Sicherungsschicht ist ebenfalls für die Fehlererkennung zuständig. Dabei werden fehlerhaft uebertragene Rahmen beim Empfänger der Sicherungsschicht in der Regel verworfen. Dazu ist in dem Endekennzeichen ein Feld für das Einsetzen eines sogenannten zyklischen Codes vorgesehen, die sogenannte Frame Checking Sequenz FCS oder auch Cyclic Redundancy Check CRC. Die Idee ist hierbei, ein Datenpaket als Polynom zu interpretieren. Der Sender ergänzt das Datenpaket derart, daß der Empfänger bei Division durch ein sogenanntes Generatorpolynom den Rest 0 erhält. Hiermit wird die Fehlererkennung realisiert. Optional erfüllt die Sicherungsschicht ebenfalls die Fehlerkorrektur. Dies erfolgt durch die Wiederholung von fehlerhaft empfangenen Paketen, zum Beispiel durch den Einsatz des ARQ-Verfahrens.

Protokolle der Sicherungsschicht werden in der Regel zwischen physikalisch direkt benachbarten Netzknoten eingestetzt. Dazu sind eine Reihe alternativer Protokolle definiert worden. Welches Protokoll zwischen zwei Netzknoten eingesetzt wird, richtet sich nach dem Netzwerk, durch das die beiden Netzknoten verbunden sind. Ein Beispiel für ein Protokoll der Sicherungsschicht ist das bekannte Point-to-Point Protokoll, das PPP. Das PPP erfüllt die ersten zwei Aufgaben der Sicherungsschicht, die Rahmung und die Fehlererkennung. Somit wird vom PPP keine Wiederholung der fehlerhaft empfangenen Paketen durchgeführt. Es existiert zwar eine spezielle Implementationsform von PPP, welche in einem sogenannten "numbered-mode" arbeitet RFC1663. In der Regel wird sie jedoch nicht verwendet.

Aufgrund dessen, daß das PPP keine Korrektur durch die wiederholte Paketübertragung unterstützt beziehungsweise, weil das Verfahren bei hohen Übertragungsfehlerraten ineffizient wäre, wird in Netzen, die eine besonders hohe Fehlerrate in einer Datenübertragung aufweisen, ein zusätzliches Protokoll eingeführt. Als ein Beispiel für Netze bei denen hohen Übertragungsfehlerraten auftreten, sind die Mobilfunknetze bekannt. Darunter sind das GSM (Global System for Mobile Communication) und GPRS (General Packet Radio Service) einzuordnen. Im GSM-Netz wird als zusätzliches Protokoll auf der Sicherungsschicht, das sogenannte RLP (Radio Link Protocol) eingesetzt. Das RLP segmentiert den Bytestrom, den es von der PPP-Schicht bekommt in Rahmen, die in der Regel kleiner sind als die Rahmen auf PPP Ebene. Auf der Basis dieser Rahmen wird die Fehlerkorrektur im ARQ-Verfahren durchgeführt. Die Funktionalität von ARQ setzt voraus, daß die Rahmen durchnumeriert sind. Deswegen erhält jeder Rahmen bei der Gruppierung eine eindeutige fortlaufende Sequenznummer. In dem heutigen Implementationsstadium wird der Bytestrom transparent in RLP-Rahmen segmentiert und verpackt. Hierbei wird nicht beachtet, um welche Art der Daten, Kontrolldaten oder die tatsächlichen Daten es sich handelt, für die RLP-Schicht ist ausschließlich ein Bytestrom sichtbar. Dabei kann es vorkommen, daß Daten aus zwei verschiedenen PPP-Rahmen in ein RLP-Rahmen zusammengefasst werden. Das RLP-Rahmen enthält dann das Endekennzeichen des ersten PPP-Rahmen und ebenso das Anfangskennzeichen des folgenden PPP-Pakets. Die Lösung ist in EP98113212.9 gegeben. Hierin wird eine Lösung vorgeschlagen, in dem beim Sender der Bytestrom nach den Abgrenzungskennzeichen untersucht wird. Hiermit wird beim Verpacken des Bytestroms in RLP-Pakete auf der Senderseite zwischen den verschiedenen PPP-Pakten unterschieden und somit wird vermieden, daß Daten aus zwei PPP-Pakteten in ein RLP zusammengefasst werden.

Die gleiche Funktionalität wird im GPRS-Netz durch das RLC-Protokoll realisiert. Dies ergibt sich daraus, daß beide Protokolle, sowohl das RLP als auch das RLC an den ISO-Standard HDLC (High Level Data Link Control) ISO87 angelehnt sind und demgemäß eine ähnliche Struktur aufweisen. Ein Unterschied zwischen den Protokollen liegt in der Erstellung der Rahmen.

Das Ziel eines hierarchischen Aufbaus ist es eine Protokollarchitektur zu entwickeln, in der die Protokollschichten und vor allem die Protokolle, im Hinblick auf eine horizontale Betrachtung, voneinander unabhängig sind. Hiermit wird erreicht, daß verschiedene Anwendungen und verschiedene Transportprotokolle über das gleiche Netzwerkprotokoll, zum Beispiel das Internet Protokoll, das IP übertragen werden. Weiterhin wird ermöglicht, daß eine IP-Protokollschicht auf verschiedenen physikalischen Plattformen funktionsfähig ist. Demgemäß können die IP-Datagramme über unterschiedliche physikalische Netze, beispielsweise GSM, Internet, GPRS übertragen werden.

Für einen Benutzer bleibt die Kommunikation auf den Protokollebenen im wesentlichen unsichtbar. Er erwartet von dem verfügbaren System eine Unterstützung der unterschiedlichsten Anwenderdienste, wie beispielsweise Versendung und Empfang von e-mails, Dateitransfer oder Webbrowsing. Die zur Übertragung bereitgestellte Daten überschreiten oft die Größe der Pakete, die über eine physikalische Verbindung übertragen werden können. Aus diesem Grund erfolgt eine Aufteilung einer Nachricht in kleinere Pakete, die aufeinanderfolgend für eine Übertragung angeordnet werden. Die Aufteilung der Daten ist ein Bestandteil der Formatierung. Die Formatierung der Daten wird auf jeder Protokollschicht durchgeführt. Auf bestimmten Protokollschichten, beispielsweise der RLP-Schicht erfolgt zusätzlich eine Aufteilung der Daten, das heißt diese werden in kleinere Datenblöcke unterteilt. Auf verschiedenen Schichten tragen die Datenblöcke unterschiedliche Namen, beispielsweise auf der IP-Protokollschicht heißen sie Datagramme und auf der Sicherungsschicht Rahmen. Im weiteren werden die Datenblöcke, die sich nicht gesondert auf eine Protokollschicht beziehen mit dem Begriff Datenpaket bezeichnet.

Die Formatierung der Daten beinhaltet insbesondere das Hinzufügen der für jede Protokollschicht charakteristischen Kontrolldaten. Meistens werden die Kontrolldaten am Anfang eines Datenpaketes in Form des sogenannten Kopffeldes oder/und am Ende in Form des sogenannten Endefeldes eingehängt. Die tatsächlichen Daten sind in dem Nutzdatenfeld enthalten. Dieser Mechanismus ist im folgenden anhand eines TCP/IP Protokollstapels näher erläutert.

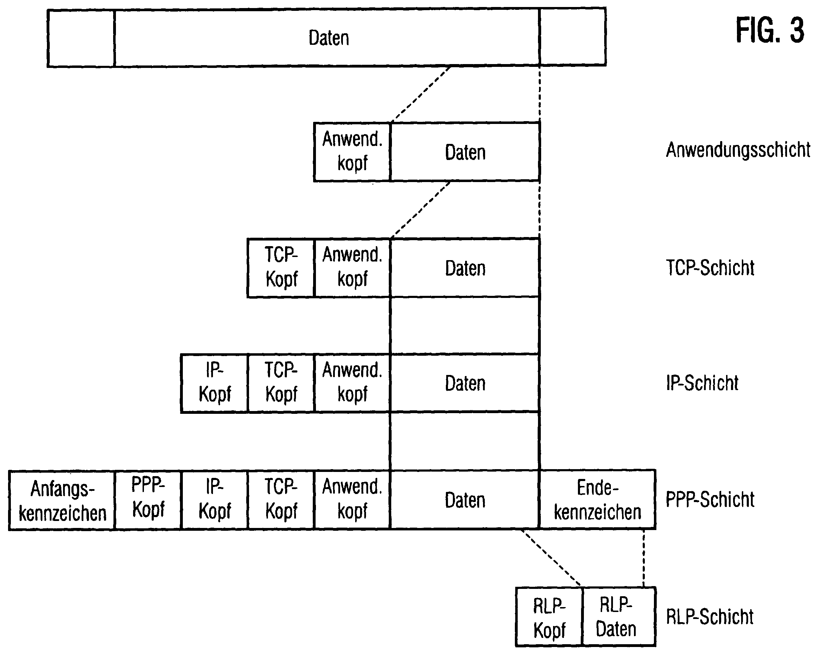

Gemäß Figur 3 werden auf der Anwendungsschicht die Benutzerdaten segmentiert und zu jedem Datenpaket werden Kontrollinformationen hinzugefügt. Diese Datenpakete werden folglich an die Transportschicht TCP weitergegeben. Diese fügt ihre Kontrolldaten in Form eines Kopffeldes hinzu. Diese Daten werden an eine Netzwerkschicht, bei der beispielsweise das IP die relevanten Kontrolldaten und wie Leitwegsinformationen enthält, übergeben. Auf diese Weise entsteht ein IP-Datagramm, welches im folgenden Schritt einer Sicherungsschicht weitergegeben wird. Die Protokolle der Sicherungsschicht, wie beispielsweise das PPP bearbeiten die empfangenen Daten, in dem eigene Kontrollinformationen, zum Beispiel die Abgrenzungskennzeichen hinzugefügt werden. Die Datenpakete, die auf dieser Ebene erstellte werden, werden als Rahmen bezeichnet. Diese Rahmen werden dann über das bereitgestellte Netzwerk übertragen. Es kommt vor, daß beim Empfänger einer bestimmten Ebene die Datenpakete in unterschiedlicher Reihenfolge ankommen. Die Aufgabe des Empfängers dieser Ebene kann es sein die gesendete Reihenfolge wieder herzustellen. Diese Aufgabe hat zum Beispiel ein TCP oder ein RLP Empfänger, nicht aber beispielsweise ein IP Empfänger.

Der Mechanismus des Verpacken der Daten auf den Protokollschichten ist unter dem Begriff Einkapselung bekannt. Die Umkehrfunktion heißt Entkapselung und wird auf der Empfängerseite durchgeführt.

Im folgenden werden die Datenpakete, die sich entweder auf die RLP-Rahmen oder die RLC-Rahmen oder auch auf die PPP-Rahmen, die in "numbered-mode" arbeiten, beziehen mit der verallgemeinerten Bezeichnung L2ARQ-Rahmen gekennzeichnet.

In Form von den L2ARQ-Rahmen werden die Benutzerdaten zu einem Empfänger verschickt. Gleichzeitig werden die L2ARQ-Rahmen bei dem Sender in einem Buffer abgespeichert. Dies erscheint als notwendig im Falle, daß es zu einer Wiederholung des Pakets kommt. Anhand der fortlaufenden Nummern in den L2ARQ-Rahmen wird bei einem Empfänger festgestellt, ob ein Paket während der Übertragung verlorengegangen ist. Im Falle, daß es zu einem Verlust eines L2ARQ-Rahmens kommt, wird eine Wiederholung dieses L2ARQ-Rahmens initiiert. Durch einen entsprechenden Mechanismus erhält der Sender eine Benachrichtigung über den aufgetretenen Fehler und das Paket mit der entsprechenden Nummer wird aus dem Buffer entnommen und erneut übertragen. Im Falle, daß ein Paket erfolgreich den Empfänger erreicht hat, wird dieses aus dem Buffer auf der Senderseite entfernt.

Der beschriebene Mechanismus bezieht sich auf den sogenannten numerierten Modus. Dieser Modus leistet einen zuverlässigen Dienst, denn es wird von ihm eine zuverlässige Datenübertragung von einem Sender zu einem Empfänger gesichert. Es existiert zusätzlich der sogenannte nicht nummerierte Modus. In diesem Modus wird keine Fehlerkorrektur durch den Einsatz des ARQ-Verfahrens durchgeführt und somit leistet dieser Modus einen nicht zuverlässigen Dienst.

Die Wiederholung der Pakete führt jedoch dazu, daß auf der Empfängerseite die angekommenen Pakete in einer Reihenfolge bereitstehen, die nicht der gesendeten Reihenfolge entspricht.

In der derzeitigen Entwicklung ist es die Aufgabe des Sicherungsprotokolls, vorausgesetzt dies unterstützt das ARQ, die L2ARQ-Rahmen in die gesendete Reihenfolge zu bringen. Dies bedeutet, daß beispielsweise die empfangenen RLP-Pakete so lange in einem Buffer auf der Empfängerseite angesammelt werden, bis die Reihenfolge der RLP-Pakete wiederhergestellt ist. Das heißt ein RLP-Rahmen wird an die direkt darüberliegende Schicht erst dann freigegeben, wenn dieser erstens vollständig empfangen wurde und zweitens, wenn dieser der Folgende in der Reihenfolge ist. Wenn aber ein Rahmen aufgrund eines Fehlers wiederholt wird, dann werden alle die nachfolgende bereits empfangene Rahmen so lange im Buffer gehalten bis, der wiederholte Rahmen fehlerfrei empfangen wurde. Erst wenn die RLP-Pakete in eine entsprechende Reihenfolge, die anhand der Sequenznummern erstellt wird, angeordnet sind, werden sie folglich an die PPP-Schicht weiter gegeben. Zuvor erfolgt noch die Entfernung der Kontrollinformationen.

Beim Empfänger der PPP-Schicht wird eine Identifizierung der PPP-Rahmen durchgeführt. Hierzu wird nach den Abgrenzungskennzeichen gesucht, wenn ein PPP-Rahmen als komplett erkannt ist, wird das enthaltene IP-Datagram an die IP-Schicht weitergegeben, welches dann das enthaltene TCP Segment an die TCP-Protokollschicht übergibt.

Aufgrund dessen, daß die L2ARQ-Rahemen auf der Sicherungsschicht zwischen gespeichert werden, um diese Rahmen in die entsprechende Reihenfolge zu bringen, können hohe Abarbeitungszeiten entstehen. Insbesondere wirkt sich das negativ auf die im Bezug auf die Zeitverzögerung empfindliche Anwendungen aus. Hohen Zeitverzögerungen verursachen auf jeden Fall Einbußen in der effizienten Datenabarbeitung. Dies kann bei den verzögerungsempfindlichen Anwendungen sogar zum Abbruch einer Ausführung führen. Zusätzlich erfordert diese Methode einen großen Buffer auf den entsprechenden Protokollschichten, insbesondere aber auf der RLP-Protokollschicht. Die Pakete werden nämlich so lange auf dieser Ebene zwischengespeichert bis die geforderte Reihenfolge wieder erstellt ist. Lange Speicherung der Daten führt aber zur Entstehung von hohen Verzögerungszeiten in der Abarbeitung der Daten in einer hierarchischen Protokollarchitektur.

Demgemäß ist es die Aufgabe der vorliegenden Erfindung eine Methode und eine Vorrichtung zu schaffen, die eine effizientere Aufarbeitung der Daten beim Empfänger in paketorientierten Anwendungen bei einer Datenübertragung gewährleistet. Insbesondere ist es die Aufgabe der Erfindung eine Reduzierung des Speicherbedarfs auf der Empfängerseite zu erzielen.

Dies wird erfindungsgemäß gelöst durch die Lehre des Patentanspruches 1 und durch die Lehre des Patentanspruches 24.

Vorteilhaft erweist sich hierbei, daß durch die unmittelbare Weitergabe der auf der Sicherungsschicht vollständig erstellten Paketen an die direkt darüber liegende Protokollschicht keine lange Zwischenspeicherungszeiten entstehen.

Aus diesem Grund erweist sich ebenfalls als vorteilhaft, daß die empfangenen Daten schneller an die Anwendungsschicht zugestellt werden und somit eine stabilere Arbeitsweise von verzögerungsempfindlichen Anwendungen gewährleistet wird.

Ein weiterer Vorteil erweist sich in der Reduzierung der notwendigen Speicherkapazität auf der entsprechenden Protokollschicht auf der Empfängerseite, denn die empfangenen Daten werden nicht so lange im Buffer gehalten bis eine entsprechende Reihenfolge der empfangenen Daten erstellt ist, sondern die vollständig erstellten Paketen werden direkt an die darüber liegende Protokollschicht freigegeben, auch wenn gegebenenfalls einige Datenpakete vorher nicht empfangen wurden.

Weitere vorteilhafte Ausgestaltung der Erfindung ergibt sich aus den Ansprüchen 2 bis 23 und der Patentanspruch 25.

Im folgenden wird die Erfindung anhand von Ausführungsbeispielen und Figuren näher erläutert.

Folgende Figuren zeigen:
Fig.1: Ablaufdiagramm des erfindungsgemäßen Verfahrens,
Fig.2: Darstellung von Protokollschichten im Internet,
Fig.3: Schematische Darstellung von Benutzerdaten,
Fig.4: Darstellung eines Netzwerksystems,
Fig.5: Ein Internet-Protokoll-Diagramm,
Fig.6: Darstellung eines RLP-Rahmen,
Fig.7: Darstellung eines Inter-Datentransfer-Modus, und
Fig.8: Darstellung eines Intra-Datentransfer-Modus.

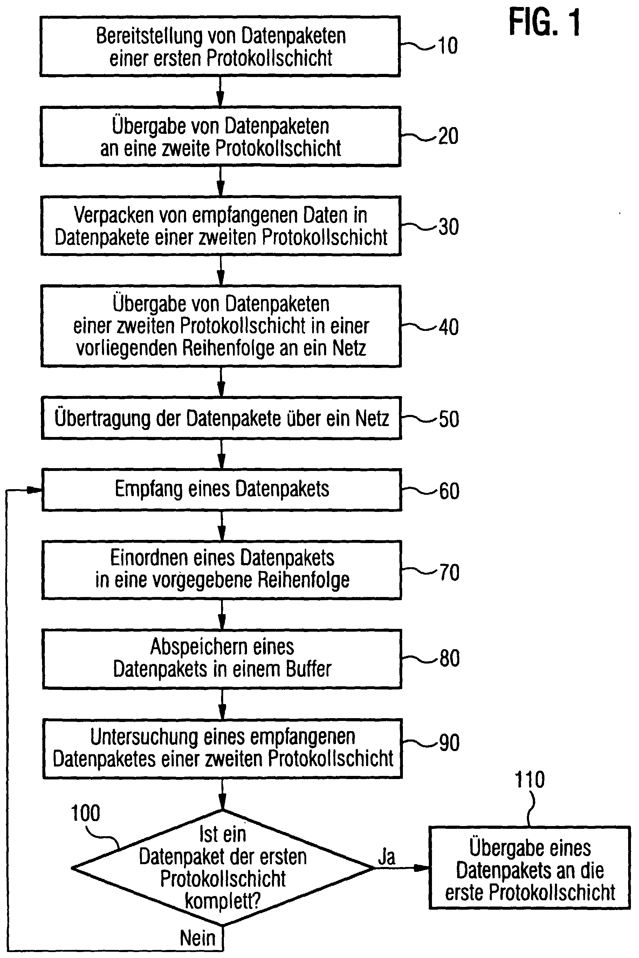

Im folgenden wird die Erfindung anhand der Figur 1 und des Patentanspruches 1 erläutert.

Gemäß Figur 1 werden auf einer Senderseite Datenpakete einer ersten Protokollschicht bereitgestellt 10 und folglich an eine direkt darunterliegende zweite Protokollschicht übergeben 20. Diese Schicht verpackt die empfangenen Daten in Datenpakete der zweiten Protokollschicht 30. Hierbei wird darauf geachtet, daß ein Datenpaket der zweiten Protokollschicht nicht die Daten von zwei verschiedenen Datenpakete der ersten Protokollschicht enthält. Jedes Datenpaket der zweiten Protokollschicht erhält eine eindeutige Sequenznummer. Die auf diese Weise verpackte Datenpakete der zweiten Protokollschicht werden in der vorliegenden Reihenfolge an ein bereitgestelltes Netzwerk übergeben 40 und folglich über das Netz übertragen 50. Auf einer Empfängerseite werden die einzelnen Datenpakete der zweiten Protokollschicht empfangen 60. Die empfangenen Datenpakete werden der zweiten Protokollschicht anhand der Seguenznummer in eine Reihenfolge einsortiert 70 und in einem bereitgestellten Buffer abgespeichert 80. Diese werden untersucht, um die Datenpakete der ersten Protokollschicht zu erkennen 90. Wenn ein Datenpaket der zweiten Protokollschicht empfangen wird, wird zuerst untersucht, ob dieses Datenpaket Abgrenzungskennzeichen der ersten Protokollschicht enthält. Ist dies der Fall, dann handelt es sich entweder um ein Anfangskennzeichen oder ein Endekennzeichen eines Datenpakets der ersten Protokollschicht. Im Falle des Anfangskennzeichens, bedeutet dies, dass die nachfolgenden Datenpakete der zweiten Protokollschicht zu einem neuen Datenpaket der ersten Protokollschicht gehören. Die Datenpakete der zweiten Protokollschicht werden in dem Buffer so lange gehalten bis ein Datenpaket der ersten Protokollschicht komplett empfangen worden ist 100. Dies wird erkannt durch den Empfang eines Datenpakets der zweiten Protokollschicht, in dem das Datenfeld ein Endekennzeichen enthält und außerdem der folgende in der Reihenfolge ist. Erst ein vollständig erstelltes Datenpaket der ersten Protokollschicht wird an die direkt darüberliegende Protokollschicht freigegeben 110.

Im folgenden wird die Erfindung gemäß des Patenanspruches 24 näher erläutert.

Eine Formatierung von Datenpakete einer ersten Protokollschicht auf einer zweiten Protokollschicht und ihre Anordnung gemäß einer Reihenfolge der Versendung ist durch ein Mittel zur Bereitstellung von Datenpaketen einer ersten Protokollschicht an eine zweite Protokollschicht realisiert. Diese Datenpakete werden mit Sendemitteln zum Versenden über ein bereitgestelltes Netz versendet. Das Empfangsmittel zum Empfangen der Datenpakete auf der Empfängerseite empfängt die Pakete. Die empfangenen Datenpakete werden mit Sortiermitteln zur Einsortierung der Datenpakete in eine Reihenfolge der aufeinanderfolgenden Datenpakete gebracht und in einem Buffer zum temporären Abspeichern der empfangenen Datenpakete der zweiten Protokollschicht abgespeichert. Die Datenpakete der zweiten Protokollschicht werden darauf untersucht, ob ein Datenpaket der ersten Protokollschicht erkennbar ist. Dies erfolgt mit dem Einsatz von Erkennungsmitteln zur Erkennung eines vollständig zusammengesetzten Datenpaketes der ersten Protokollschicht. Folglich wird ein vollständig erstelltes Datenpaket der ersten Protokollschicht mit Einsatz von Mitteln zur Untersuchung nach der Zugehörigkeit zu einem Datentransfer untersucht. Danach wird ein untersuchtes Datenpaket mit dem Freigabemittel zur Freigabe eines vollständig erstellten Datenpaketes an die erste Protokollschicht freigegeben.

Ein mögliches Einsatzgebiet der Erfindung ist im Bereich der Internet Anwendungen über ein mobiles Datennetzwerk, beispielsweise das GSM. Im folgenden wird anhand eines Ausführungsbeispieles eine mögliche Anwendung der Erfindung näher erläutert. Hierbei wird die Aufarbeitung der Daten von der Anwendung auf der Senderseite bis zu der Freigabe der vollständig erstellten Datenpaketen auf der Empfängerseite präsentiert.

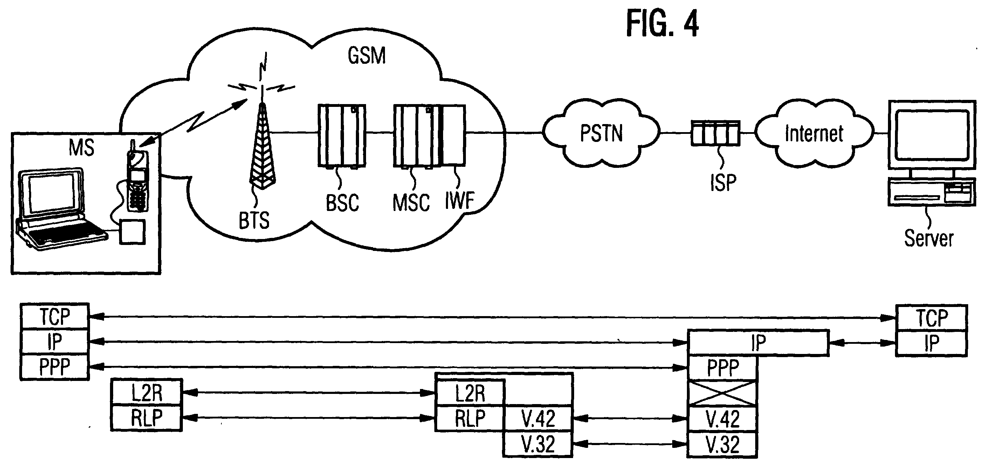

Zu diesem Zweck wird ein Netzwerksystem verwendet, das in Figur 4 schematisch dargestellt ist. Hierbei ist schematisch eine Kommunikation zwischen einem mobilen Teilnehmer, beispielsweise mit einer mobilen Station und einem in einem festen Netz eingegliederten Teilnehmer, Server gezeigt. Der obere Teil der Figur zeigt die physikalische Verbindung mit den entsprechenden Kommunikationseinheiten, und der untere Teil stellt die logische Verbindung mit den involvierten Protokollen dar.

Die mobile Station MS kann beispielsweise ein Laptop Computer sein. Dieser ist über eine Terminal Adaptation Funktion (TAF), deren Aufgabe beispielsweise die PCMCIA-Karte (Personal Computer Memory Card International Association) erfüllt, mit der mobilen Station MS, beispielsweise mit einem mobilen Telefon verbunden. Die mobile Station MS kommuniziert mit einem BTS (Base Transceiver Station), das wiederum mit einem BSC (Base Station Controller) kommuniziert. Die Verbindung zu einem öffentlichen analogen Telephonnetz, das sogenannte Public Switched Telefone Network (PSTN), ist mit Einsatz eines Modems, das in der sogenannten InterWorking Funktion IWF integriert ist, realisiert. Die InterWorking Funktion IWF ist ein Teil der mobilen Vermittlungsstelle, die sogenannte Mobile Services Switching Center (MSC). Weiterhin verläuft die Verbindung über ein öffentliches Telephonnetz PSTN zu einem Internet Service Provider (ISP), der über einen Netzübergangsknoten zu dem Internet verfügt. Die Verbindung zu einem Endteilnehmer, Server wird über das Internet aufgebaut. Der Übersicht halber ist die Verbindung über das Internet in der Figur 4 nicht detailliert ausgeführt.

Zu beachten ist, daß die Anwendungen unabhängig von den zugrundeliegenden Protokollschichten ausgeführt werden. Die Übertragung der von ihnen erzeugten Daten erfolgt für den Benutzer transparent. Das ist auch das Ziel des hierarchischen Aufbaus eines Protokollstapels, eine optimale und stabile Übertragung zu garantieren, ohne den Benutzer in die Systemgegebenheiten involvieren zu müssen.

Es wird jedoch von dem zugrundeliegenden System erwartet, daß es alle von dem Benutzer verwendeten Anwendungen, wie beispielsweise Zugang zum Internet oder Transfer von Videodaten unterstützt. Die verschiedenen Anwendungen stellen jedoch unterschiedliche Anforderungen an das System.

Beispielsweise erwarten bestimmte Internetanwendungen, wie eine Banktransaktionen, ein sicheres Transportprotokoll. Denn nur auf diese Weise wird ein fehlerfreier Datentransfer bei Geldtransaktionen über das Internet sichergestellt. Ein sicherer Transport von Daten gewährleistet das sogenannte Transmission Control Protocol TCP.

Im Gegensatz dazu, ist es nicht erforderlich bei Videotransfer ein Protokoll zu verwenden, daß eine zuverlässige Sicherung der Datenübertragung gewährleistet, da die Sicherheit eines zuverlässigen Datentransfers gegebenenfalls mit hohen Verzögerungszeiten in der Übertragung verbunden ist. Im Falle von Videoübertragung ist es besser eine schnelle Zustellung von Daten zu gewährleisten, um somit einen realistischen Eindruck bei der Darstellung der Videosbilder zu erzielen. Die Fehler, die während einer Übertragung auftreten können, sind innerhalb eines gewissen Rahmens, bei der Ausstrahlung der Videobilder vertretbar. Aus diesem Grund wird bei Videoübertragung kein fehlerkorrigierendes Protokoll verwendet. Ein Beispiel für solche Protokolle der Transport Ebene ist das sogenannte User Datagram Protocol UDP.

Meistens beansprucht ein Benutzer während einer Sitzung mehrere Anwendungen, beispielsweise, wenn er gleichzeitig eine elektronische Post, das Email versenden und im Hintergrund ein Video übertragen will. In diesem Fall erzeugt der Benutzer zwei verschiedene Datentransfers, wobei das Email Versenden auf dem TCP und die Videoübertragung auf dem UDP basiert. Ein anderes Beispiel ist der Zugang zum Internet. Meistens werden während einer Sitzung mehrere Internetseiten angesprochen, die oft auf verschiedenen Server lokalisiert sind. In diesem Fall obwohl es sich bei den generierten Datentransfers ausschließlich um die TCP-Transfers handelt, sind das verschiedene Datentransfers, denn die Empfänger sind unterschiedlich.

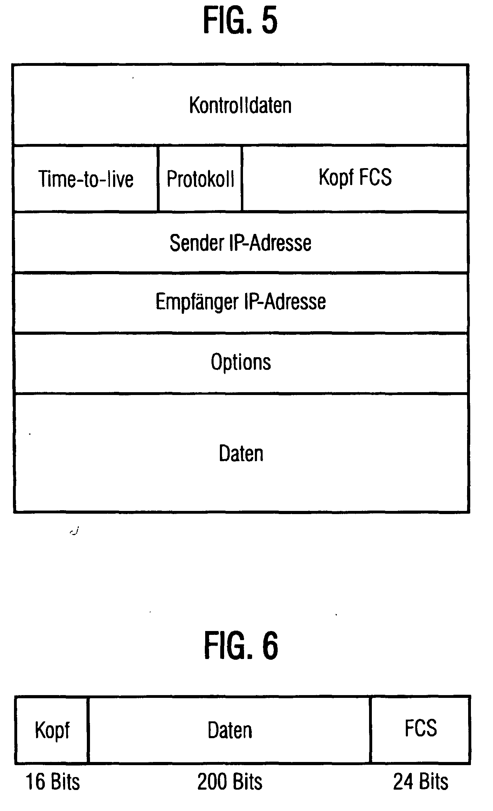

Diese Unterscheidung wird auf der Netzwerkprotokollschicht, wie beispielsweise der IP-Schicht berücksichtigt. Diese Schicht erhält nämlich von der Transportprotokollschicht Pakete und verpackt sie in Pakete eigenen Formates. Die Figur 5 stellt ein Format eines IP-Paketes dar. Dies enthält Kontrolldaten, darunter fällt beispielsweise die Version des IP-Protokolls, zum Beispiel IPv4 oder IPv6. Dies ist in der Figur 4 nicht explizit ausgezeichnet. Weiterhin ist in dem IP-Datenformat ein Feld vorgesehen, das die Information bezüglich des Transportprotokolls enthält. Das bedeutet im Falle eines UDP Protokolls wird in dieses Feld eine Bitkombination eingetragen, die der Bezeichnung des UDP entspricht.

Das Entscheidende bei der Unterscheidung des Datentransfers ist aber nicht nur der Protokolltyp, sondern auch welche Adressen in dem IP-Kopf enthalten sind. Das heißt, wenn gemäß Figur 5 sowohl die IP-Adresse des Sender als auch die IP-Adresse des Empfänger in zwei IP-Paketen übereinstimmen, dann muss zusätzlich der TCP-Kopf untersucht werden, um die Unterschiedlichkeit der Datentransfers festzustellen. Für die verschiedenen Datentransfers werden unterschiedliche Portnummern vergeben. Diese Portnummern identifizieren den entsprechenden Datentransfer auf Transportebene und anhand deren wird eine Kommunikation zwischen den Partnerinstanzen gewährleistet. Im Kopf eines TCP-Paketes sind die Informationen bezüglich der Portnummer enthalten und bei Unterscheidung des Datentransfers werden diese verglichen. Erst wenn die Portnummern des Senders und Empfängers übereinstimmen, handelt es sich um den gleichen Datentransfer. Bei Unterschieden in diesen Adressen, das bedeutet, wenn sowohl die IP-Adressen als auch die Portnummern sich voneinander unterscheiden, handelt es sich um verschiedene Empfänger und somit um verschiedene Datentransfers. Dieses Mechanismus ist in der heutzutage verwendeten Version des IPs, die sogenannte Internet Protokol Version 4, IPv4 implememtiert. In der nächsten Version des IPs, die sogenannte Internet Protokoll Version 6, IPv6 ist dies prinzipiell genauso definiert. Hier werden unterschiedliche Datentransfers durch sogenannte Datentransfersidentifikatoren genannt auch 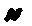 Flow-Identifier" unterschieden. Das beschriebene Verfahren lässt sich also ebenso auf IPv6 und prinzipiell auf jeden Protokollstapel übertragen, bei dem Datentransfer identifizierbar sind.

In Abhängigkeit davon, ob die Pakete auf der IP-Schicht von den gleichen oder von unterschiedlichen Datentransfers stammen, werden zwei Modi unterschieden. Bei den IP-Paketen eines gleichen Datentransfers handelt es sich um einen sogenannten Intra-Datentransfer-Modus. Mit dem Begriff Inter-Datentransfer-Modus wird ein Modus bezeichnet, bei dem IP-Pakete unterschieden werden, die zu verschiedenen Datentransfers gehören.

Gemäß Figur 4, für den Fall, dass eine Verbindung auf der Transportschicht zwischen einer mobilen Station und einem Server im Internet, bereits aufgebaut ist, wird im folgenden ein Beispiel angegeben für einen Datentransfer von diesem Server zu der mobilen Station MS. In diesem Beispiel wird die Involvierung der Kommunikationseinheiten und der Kommunikationsprotokollen näher erläutert.

Die auf der Netzwerkschicht verpackte IP-Datagramme werden über das Internet bis zu einem sogenannten Internet Service Provider ISP übertragen. Der ISP übergibt die empfangene IP-Pakete der PPP-Schicht. Diese erstellt aus den erhaltenen Daten einen in PPP-Rahmen formatierten Bytestrom. Zur Unterscheidung zwischen den jeweiligen Paketen werden die Abgrenzungskennzeichen hinzugefügt. Folglich werden die PPP-Rahmen für eine analoge Übertragung bereitgestellt. Das ISP stellt für die Übertragung ein Modem zur Verfügung, welches die Daten je nach Übertragungsgeschwindigkeit und -Modus auf ein Audiosignal moduliert. In dem aufgeführten Beispiel, in dem eine Verbindung über ein analoges Netz, das PSTN, verläuft, ist das ein V.32 Modem. Verläuft die Verbindung über ein ISDN Netz, wird beispielsweise ein Protokoll V.110 verwendet. Für die Flusskontrolle, das heißt um in der InterWorking Funktion IWF einen Überlauf der Daten zu verhindern, wird ein V.42 Protokoll verwendet. Diese Aufgabe entspricht der Aufgabe des Radio Links Protokolls RLP im GSM.

In der InterWorking Funktion IWF erfolgt die Umsetzung der angekommenen Daten in das für das GSM vorgesehene Format.

Das bedeutet der Bytestrom der PPP-Schicht wird an die RLP-Schicht freigegeben. Diese Schicht verpackt den empfangenen Bytestrom in RLP-Rahmen. Ein Format eines RLP-Rahmens ist in Figur 6 dargestellt. Ein RLP-Rahmen besteht aus 240 Bits. Von diesen sind 16Bits für die Kopf-Informationen und 24Bits für die Frame Checking Sequenz FCS vorgesehen. Entscheidend bei dem Verpacken der PPP-Rahmen in RLP-Rahmen ist, daß für die RLP-Schicht in dem empfangenen Bytestrom keine Datenpakete der höheren Protokollschichten direkt sichtbar sind. Dies bedeutet insbesondere, daß die RLP-Schicht nicht zwischen den PPP-Rahmen oder zwischen den IP-Datagrammen und somit zwischen den Paketen der Transportschicht unterscheiden kann. Zur Differenzierung der Pakete muß der Bytestrom nach den Abgrenzungskennzeichen untersucht werden. Dies ist notwendig, um zu verhindern, daß Daten aus zwei verschiedenen PPP-Rahmen in ein RLP zusammengepackt werden. Jeder neu erstellter RLP-Rahmen wird mit einer Sequenznummer versehen.

Auf dieser Weise angeordnete Pakete werden über ein bereitgestelltes mobiles Netzwerk übertragen. Während der Übertragung kann es zur Vertauschung der Reihenfolge der RLP-Rahmen, aufgrund der aufgetretenen Übertragungsfehlern und des verwendeten ARQ-Verfahrens zu deren Korrektur, kommen. Folglich bedeutet das, daß die Rahmen in vertauschter Reihenfolge beim Empfänger empfangen werden. Der Empfänger untersucht erstens die empfangenen RLP-Rahmen nach der Sequenznummer, um die Position des RLP-Rahmen in der vorliegenden Reihenfolge festzustellen. Im weiteren Schritt wird überprüft, ob der empfangene RLP-Rahmen ein Abgrenzungskennzeichen enthält. Im Falle es enthält ein Anfangskennzeichen, wird es als der erste Rahmen in einem folgenden PPP-Rahmen erkannt und auf der entsprechenden Position in einem Buffer abgespeichert. Die nachfolgenden RLP-Rahmen, die die fortlaufenden Nummern aufweisen, werden dann ebenfalls auf der entsprechenden Position im Buffer abgelegt. Dies wird so lange fortgesetzt bis ein PPP-Rahmen den Status eines vollständig erstelltes Rahmens bekommt. Ein PPP-Rahmen gilt als vollständig erstellt, wenn sowohl das Anfangs- als auch das Endekennzeichen korrekt empfangen worden sind, sowie alle RLP-Rahmen lückenlos und korrekt empfangen wurden, die reihenfolgerichtig zwischen dem das Anfangskennzeichen enthaltende RLP-Rahmen und dem das Endekennzeichen enthaltende RLP-Rahmen liegen. Bevor die RLP-Rahmen in den Buffer abgespeichert werden, erfolgt eine Entkapselung der Rahmen, das heißt die Kontrolldaten der RLP-Protokollschicht werden entfernt.

Bei der Untersuchung der RLP-Pakete werden nicht nur die PPP-Pakete unterschieden, sondern die Untersuchung der Rahmen kann um die Erkennung der IP-Pakete erweitert werden. Auf dieser Basis wird nämlich die Unterscheidung zwischen dem Intra-Datentransfer-Modus und dem Inter-Datentransfer-Modus gemacht. Wie bereits erwähnt ist im IP-Kopf die Information bezüglich des verwendeten Transportprotokolls und der korrespondierenden Adressen enthalten. Aufgrund der Tatsache, daß ein ganzes IP-Datagramm in ein PPP-Rahmen hineinpaßt, kann die Untersuchung eines fertig erstellten PPP-Rahmens auf die Erkennung eines IP-Datagramms und dessen Informationen, das heißt ob es sich um IP-Datagramme des gleichen oder verschiedener Datentransfers handelt, zurückgeführt werden.

Zu diesem Zweck werden, nach der Erstellung eines vollständigen PPP-Rahmen, die Kontrolldaten des Rahmens untersucht. Insbesondere werden die Daten nach den Kontrolldaten der jeweiligen Protokollschicht untersucht. Dies wird durch ein Erkennungsmittel zum Erkennen eines vollständig zusammengesetzten Datenpakets realisiert. Dies bedeutet, daß dieses Mittel Informationen bezüglich der Kontrolldaten der jeweiligen Schicht haben muss. Denn nur auf dieser Basis wird entschieden, welche Kontrolldaten von der Sicherungsschicht, insbesondere von dem PPP stammen und wo in dem PPP-Rahmen die Kontrolldaten der IP-Protokollschicht anfangen. Aufgrund dessen, daß das Format der Entkapselung der Daten auf jeder Schicht standardisiert ist, muss in diesem Mechanismus eine Implementation vorgenommen werden die sich an die geltenden Standards der Einkapselung anlehnt. Eine genauere Darstellung der Untersuchung der IP-Datagramme ist anhand der im weiteren aufgeführten Ausführungsbeispiele angegeben.

Ein IP-Datagramm wird an die direkt darüberliegende Protokollschicht, die Transportschicht, weitergeleitet. Die TCP-Pakte sind ebenfalls durchnumeriert und aufgrund der vorhandenen Nummerierung wird die Reihenfolge der TCP-Pakete auf der Transportschicht erstellt. Mit anderen Worten ist das TCP für die reihenfolgetreue Anordnung der TCP-Pakete zuständig. Auf dieser Ebene werden ebenfalls die fehlerhaften Pakete erkannt und die Fehler behoben, in dem eine Anfrage nach der wiederholten Versendung der Pakete gestartet wird.

Aufgrund dessen, daß das TCP für die Erstellung der richtigen Reihenfolge der übertragenen TCP-Pakete verantwortlich ist, ist es nicht mehr notwendig dieses auch auf der Netzwerkprotokollschicht durchzuführen. Insbesondere wird dadurch erlaubt, daß die IP-Datagramme in vertauschter Reihenfolge empfangen werden. Die Ursache für den nicht reihenfolgegetreuen Empfang der IP-Datagramme ist ihre asynchrone Übertragung. Die einzelnen Pakete können verschiedene Wege zu dem Empfänger nehmen und somit kann es vorkommen, daß die gesendeten Pakete sich unterwegs überholen und somit in vertauschter Reihenfolge bei dem Empfänger ankommen. Aufgrund der Tatsache, daß die Transportschicht, insbesondere das TCP für die Erstellung der Reihenfolge zuständig ist, ist es nicht wichtig, wie stark die Reihenfolge der IP-Pakete auf der Netzwerkschicht vertauscht ist. Dies bedeutet insbesondere, daß die Effizienz der Abarbeitung der Pakte nicht beeinflußt wird, wenn die Reihenfolge noch zusätzlich von RLP-Protokollschicht verändert wird.

Das gleiche gilt für das UDP, bei dem die Vertauschung der Reihenfolge der Pakete zugelassen ist.

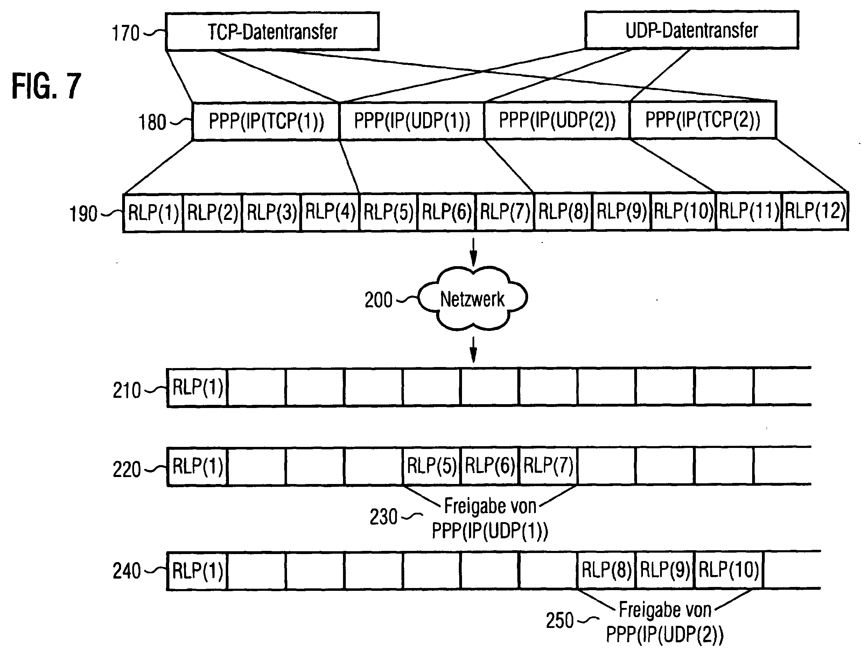

Im folgenden wird anhand von Figur 7 eine Ausgestaltung der Erfindung gemäß Patentanspruch 16 für den Inter-Datentransfer-Modus näher erläutert.

Im Inter-Datentransfer-Modus werden Pakete unterschieden, die zu verschiedenen Datentransfers gehören. Dazu werden die vollständig erstellte PPP-Rahmen, wie oben beschrieben war, untersucht. In diesem Modus werden PPP-Rahmen bereits dann vom RLP Empfänger freigegeben, wenn sie erstens vollständig und korrekt empfangen wurden und zweitens sichergestellt ist, daß in den gegebenenfalls vom RLP Empfänger gebufferten Daten keine weiteren PPP-Rahmen enthalten sind, die zum gleichen Datentransfer der freizugebenden PPP-Rahmen gehören.

Nachdem die Kontrolldaten der IP-Schicht erkannt wurden, kann innerhalb dieser Daten nach dem Transportprotokollfeld gesucht werden. Wenn der Eintrag in diesem Feld in den untersuchenden PPP-Rahmen unterschiedlich ist, dann handelt es sich auf jeden Fall um unterschiedlichen Datentransfer. Wenn aber der Eintrag bezüglich des Transportprotokolls übereinstimmt, dann werden die IP-Adressen der Sender und Empfänger untersucht. Im Falle einer Übereinstimmung der Adressen erfolgt eine Überprüfung der Portnummer der Sender und Empfänger. Wenn bei dieser Untersuchung keine Unterschiede feststellbar sind, dann handelt es sich um PPP-Rahmen eines gleichen Datentransfers.

Im folgenden wird, gemäß Figur 7, der Fall angenommen, dass der Sender Daten von zwei verschiedenen Datentransfers, UDP-Datentransfer und TCP-Datentransfer verschickt 170. Aus den Daten werden in einem Einkapselungsverfahren die PPP-Datenpakete erstellt 180. In Abhängigkeit davon, ob es sich um ein UDP-Datentransfer oder ein TCP-Datentransfer handelt, werden zwei Arten von PPP-Datenpakete die PPP(IP(TCP(n))) und die PPP(IP(UDP(n))) Pakete unterschieden. Hierbei wird mit n die Sequenznummer eines UDP oder eines TCP-Paketes bezeichnet. Gemäß Figur 7 werden auf der PPP-Protokollschicht zwei UDP-Datenpakete PPP(IP(UDP(1))), PPP(IP(UDP(2))) und zwei TCP-Datenpakete PPP(IP(TCP(1))), PPP(IP(TCP(2))) erstellt. Diese werden dann der RLP-Protokollschicht übergeben, die diese in einen Strom der aufeinanderfolgenden RLP-Rahmen RLP(1), RLP(2), ... RLP(12) verpackt 190. Wie bereits zuvor erwähnt, wird auf der RLP-Protokollschicht nicht zwischen den verschiedenen Datenpakete der darüber liegenden Protokollschicht unterschieden. Gemäss Figur 7 wird das Datenpaket PPP(IP(TCP(1))) in RLP(1), RLP(2), RLP(3) und RLP(4) aufgeteilt. Auf diese Weise werden auch die anderen Datenpakete der Netzwerkprotokollschicht aufgeteilt. Die fertig erstellten RLP-Rahmen werden dann über ein Netzwerk übertragen 200. Während der Übertragung kann es zum Vertauschen der Reihenfolge der RLP-Rahmen kommen. Dies kann beispielsweise aufgrund der häufigen Wiederholung von fehlerhaft übertragenen RLP-Rahmen des TCP Datentransfers auftreten.

Angenommen, der Empfänger empfängt gemäss Figur 7 zuerst den RLP-Rahmen RLP(1), 210 und danach werden die RLP-Rahmen RLP(5), RLP(6), RLP (7) empfangen, 220. Diese werden als vollständig empfangenes PPP-Paket erkannt. Folglich wird dieses Paket untersucht, um den Typ des Datentransfers festzustellen. Dies wird als UDP-Paket, PPP(IP(UDP(1))) erkannt und an die PPP Schicht freigegeben 230. Die Freigabe an die PPP-Schicht erfolgt aber nur dann, wenn sichergestellt wurde, dass in den vom RLP-Empfänger gegebenenfalls gebufferten Daten garantiert keine PPP-Rahmen des gleichen Datentransfers enthalten sind. Es ist in dieser Ausführungsform nämlich nur zugelassen, PPP-Rahmen an die PPP-Protokollschicht freizugeben, die zu unterschiedlichen Datentransfers gehören oder aber zum gleichen Datentransfer aber dann nur reihenfolgegetreu mit Bezug auf die Nummerierung der RLP-Rahmen.

Gemäss Figur 7 werden als nächstes die RLP-Rahmen RLP(8), RLP(9), RLP (10) empfangen 240. Diese werden wieder in ein Buffer abgelegt und als ein vollständiges PPP(IP(UDP(2))) Paket erkannt 250. Da das RLP-Protokol über die Information verfügt, daß das erste UDP-Paket, PPP(IP(UDP(1))) das zu dem gleichen UDP-Datentransfer gehört, bereits freigegeben wurde, wird aufgrund dieser Information jetzt entschieden das PPP(IP(UDP(2))) an die PPP-Protokollschicht freizugeben. Da die PPP-Rahmen des TCP-Paketes noch nicht komplett erstellt wurden, denn das PPP(IP(TCP(1))) nur das RLP(1) enthält, wird dieser weiterhin im Buffer behalten. Im Falle aber, daß auch das PPP(IP(UDP(1))) nicht komplett ist, wird das PPP(IP(UDP(2))) solange im Buffer behalten bis das PPP(IP(UDP(1))) komplett erstellt ist.

Das folgende Ausführungsbeispiel schlägt eine erweiterte Ausführungsform vor, bei der eine Freigabe von vollständig erstellten PPP-Rahmen, die sowohl zu verschiedenen als auch zu gleichen Datentransfers gehören, erlaubt.

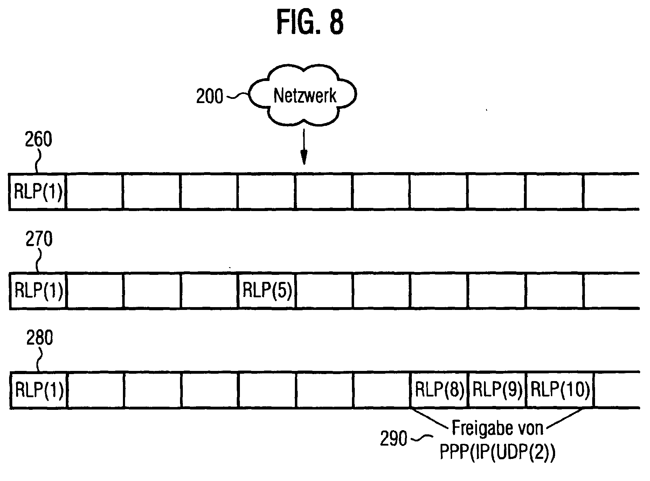

Im folgenden wird diese Ausführungsform anhand der Figur 8 und des Patentanspruches 17 näher erläutert.

Angenommen, aufgrund einer vorübergehenden schlechten Übertragungsqualität der Verbindung, die während der Übertragung der ersten PPP-Paketen aufgetreten ist, wird zuerst das PPP(IP(UDP(2))) komplett empfangen. Dies erfolgt aufgrund des Empfanges der Rahmen RLP(8), RLP(9), RLP(10) 280. Der Zwieschenspeicher enthält zwar nur einen RLP-Rahmen, den Rahmen RLP(5) 270. Aufgrund aber der Tatsache, daß das Intra-Datentransfer-Modus zugelassen ist, werden alle vollständig erstellte Rahmen, auch die, die zu dem gleichen Datentransfer gehören freigegeben. Das heisst es wird ausschliesslich auf die Vollständigkeit eines PPP-Rahmen geachtet. Für die reihenfolgetreue Anordnung der Pakete sind dann die höheren Schichten zuständig. Ebenfalls bleibt der RLP(1), der zuerst empfangen wurde und den ersten Rahmen eines nicht komplett erstellten PPP(IP(TCP(1))) darstellt, im Buffer erhalten 260.

Zuvor wurde die Erfindung anhand eines Anwendungsbeispieles aus dem GSM Bereich vorgestellt. Die gleichen Anwendungsmöglichkeiten gibt es in anderen Netzen, wie beispielsweise im GPRS-Netzwerk. Dieses Netzwerk ist konzipiert für die Übertragung der paketorientierten Anwendungen vom Sender zum Empfänger. Ebenfalls die Architektur des Protokollstapels ist in beiden Fällen vergleichbar.

Die Erfindung kann ebenfalls in einer Umgebung angewendet werden, in der nur ein Sicherungsprotokoll vorhanden ist. Das heißt statt des PPP und RLP im GSM oder des LLC und RLC im GPRS ein einziges Sicherungsprotokoll implementiert wird. Hierbei muss eine Voraussetzung erfüllt werden, daß dieses Protokoll in einem zuverlässigen Modus arbeitet. Es ist beispielsweise möglich diese Form der Implementierung im UMTS vorzufinden.

## Patentansprüche

1. Verfahren zur Verbesserung einer Aufarbeitungszeit von empfangenen Daten in paketorientierten Anwendungen bei einer Datenübertragung zwischen einem Sender und einem Empfänger mit jeweils einer ersten und einer zweiten Protokollschicht über ein Kommunikationsnetz,
- bei dem in dem Sender Daten der ersten Protokollschicht an die zweite Protokollschicht freigegeben werden,
- bei dem die Daten der ersten Protokollschicht in aufeinanderfolgende Datenpakete der zweiten Protokollschicht aufgeteilt werden,
- bei dem die Datenpakete der zweiten Protokollschicht über das Kommunikationsnetzwerk übertragen werden und,
- bei dem in dem Empfänger empfangene Datenpakete der zweiten Protokollschicht gemäß der gesendeten Reihenfolge einsortiert werden,
- bei dem auf der zweiten Protokollschicht die empfangenen Datenpakete zu Datenpakete der ersten Protokollschicht zugeordnet werden,
- bei dem nach einer vollständigen Erstellung eines Datenpakets der ersten Protokollschicht dieses an die erste Protokollschicht freigegeben wird.

2. Verfahren nach Anspruch 1 bei dem eine Aufarbeitung der Daten in dem Sender und/oder Empfänger auf einem modularen Protokollaufbau basiert.

3. Verfahren nach Anspruch 1 oder 2 bei dem die Datenpakete der zweiten Protokollschicht durchnumeriert sind und durch eine entsprechende Sequenznummer gekennzeichnet sind.

4. Verfahren nach einem der Ansprüche 1 bis 3 bei dem die erste Protokollschicht mindestens zwei Übertragungsmodi unterstützt, einen zuverlässigen und einen nicht zuverlässigen Modus.

5. Verfahren nach Anspruch 4 bei dem die Datenpakete der zweiten Protokollschicht bei einem Übertragungsfehler und unter Verwendung des zuverlässigen Übertragungsmodus, durch eine wiederholte Übertragung korrigiert werden.

6. Verfahren nach einem der Ansprüche 1 bis 5 bei dem die Daten der ersten Protokollschicht durch Abgrenzungskennzeichen eindeutig voneinander unterschieden werden.

7. Verfahren nach Anspruch 3 bei dem die empfangenen Datenpakete entsprechend einer Sequenznummer in eine Reihenfolge einsortiert werden.

8. Verfahren nach Anspruch 3 oder 7 bei dem die Sequenznummer eine RLP (Radio Link Protocol) Sequenznummer oder eine RLC (Radio Link Control) Sequenznummer ist.

9. Verfahren nach einem der vorhergehenden Ansprüchen 1 bis 8 bei dem die empfangenen Datenpakete beim Empfänger in einem Buffer abgespeichert werden.

10. Verfahren nach einem der Ansprüche 1 bis 9 bei dem ein Datenpaket der ersten Protokollschicht in einen Status eines vollständig erstellten Datenpaketes gesetzt wird, wenn sowohl das Anfangs- als auch das Endekennzeichen innerhalb von Datenpaketen der zweiten Protokollschicht korrekt empfangen worden sind, so wie alle dazwischenliegenden Datenpakete der zweiten Protokollschicht reihenfolgegetreu und korrekt empfangen worden sind.

11. Verfahren nach einem der Ansprüche 1 bis 10 bei dem die vollständig erstellten Datenpakete der ersten Protokollschicht nach den Regeln eines Einkapselungsverfahrens untersucht werden, um Pakete weiterer Protokollschichten zu identifizieren.

12. Verfahren nach einem der Ansprüche 1 bis 11 bei dem in den vollständig erstellten Datenpakete der ersten Protokollschicht mindestens ein Kontrollfeld mit Kontrolldaten vorgesehen ist, um die Informationen bezüglich eines zugehörigen Datentransfers zu liefern.

13. Verfahren nach Anspruch 12 bei dem die Kontrolldaten in Form eines Kopffeldes und/oder eines Endfeldes als Kontrollfelder in den entsprechenden Protokollschichten zu den tatsächlichen Datensequenzen angehängt werden.

14. Verfahren nach einem der Ansprüche 1 bis 13 bei dem ein Datentransfer anhand gewisser Kontrolldaten in den dafür vorgesehenen Kontrollfelder unterschieden wird.

15. Verfahren nach Anspruch 14 bei dem die Kontrolldaten zur Unterscheidung von Datentransfers die Adressen des Senders und/oder Empfängers in Form von Quelladresse, Zieladresse und Portnumern sind.

16. Verfahren nach einem der Ansprüche 1 bis 15 bei dem auf der zweiten Protokollschicht die Datenpakete der ersten Protokollschicht unmittelbar an die erste Protokollschicht freigegeben werden, wenn die Datenpakete auf der zweiten Protokollschicht erstens vollständig und korrekt empfangen wurden und zweitens sichergestellt ist, daß in den gegebenenfalls vom Empfänger der zweiten Protokollschicht gebufferten Daten keine weiteren Datenpakete der ersten Protokollschicht enthalten sind, die zum gleichen Datentransfer des freizugebenden Datenpakets der ersten Protokollschicht gehören.

17. Verfahren nach einem der Ansprüche 1 bis 15 bei dem auf der zweiten Protokollschicht die Datenpakete der ersten Protokollschicht unmittelbar an die erste Protokollschicht freigegeben werden, wenn diese Datenpakete vollständig und korrekt empfangen wurden.

18. Verfahren nach Anspruch 1 bei dem die Datenpakete der ersten Protokollschicht IP-Datagramme sind und die Datenpakete der zweiten Protokollschicht PPP-Rahmen sind, bei dem PPP-Rahmen bei Auftreten eines Fehlers durch wiederholtes Übertragen korrigiert werden.

19. Verfahren nach Anspruch 1 bei dem die Datenpakete der ersten Protokollschicht PPP-Rahmen die Datenpakete der zweiten Protokollschicht RLP-Datenrahmen sind.

20. Verfahren nach Anspruch 1 bei dem die Datenübertragung über ein IP-Netzwerk und ein Mobilkommunikationsnetzwerk verläuft.

21. Verfahren nach Anspruch 1 bei dem die paketorientierte Anwendungen die Internet Anwendungen sind.

22. Verfahren nach Anspruch 18 bis 21 bei dem eine Internet Anwendung mit dem Transportprotokoll Transmission Control Protocol (TCP) übertragen wird.

23. Verfahren nach Anspruch 18 bis 21 bei dem eine Internet Anwendung mit dem Transportprotokoll User Datagram Protocol (UDP) übertragen wird.

24. Verfahren zur Verbesserung einer Aufarbeitungszeit von empfangenen Daten in paketorientierten Anwendungen bei einer Datenübertragung zwischen einem Sender und einem Empfänger mit jeweils einer ersten und einer zweiten Protokollschicht über ein Kommunikationsnetz,
- Mitteln zur Bereitstellung von Datenpaketen einer ersten Protokollschicht an eine zweite Protokollschicht,
- Sendemitteln zum Versenden der Datenpakete,
- Empfangsmitteln zum Empfangen der Datenpakete,
- Sortiermitteln zur Einsortierung der Datenpakete in eine Reihenfolge der aufeinanderfolgenden Datenpakete,
- Erkennungsmitteln zur Erkennung eines vollständig zusammengesetzten Datenpaketes der ersten Protokollschicht,
- Mitteln zur Untersuchung der Zugehörigkeit der Datenpakete zu Datentransfer,
- Freigabemitteln zur Freigabe eines vollständig erstellten Datenpaketes an die erste Protokollschicht.

25. Vorrichtung nach Anspruch 24 mit Buffer zum temporären Abspeichern der empfangenen Datenpakete der zweiten Protokollschicht.
